(19) Europäisches Patentamt
European Patent Office
Office européen des brevets

(11) Veröffentlichungsnummer: **0 420 811 A2**

# (12) EUROPÄISCHE PATENTANMELDUNG

(21) Anmeldenummer: **90810719.6**

(22) Anmeldetag: **19.09.90**

(51) Int. Cl.5: **C08G 59/40**, C08L 63/00, C08G 59/02

(30) Priorität: **28.09.89 CH 3510/89**

(43) Veröffentlichungstag der Anmeldung: **03.04.91 Patentblatt 91/14**

(84) Benannte Vertragsstaaten: **CH DE ES FR GB IT LI NL SE**

(71) Anmelder: **CIBA-GEIGY AG**
**Klybeckstrasse 141**
**CH-4002 Basel(CH)**

(72) Erfinder: **Renner, Alfred, Dr.**
**Marcoup 2**
**CH-3286 Muntelier(CH)**

## (54) Phosphorhaltige copolymere und deren Verwendung.

(57) Phosphorhaltige Copolymere erhältlich durch Umsetzung einer Epoxidverbindung mit einem Dialkylpentaerythritdiphosphit der Formel I

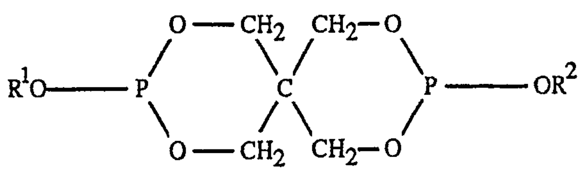

(I),

worin $R^1$ und $R^2$ unabhängig voneinander eine $C_1$-$C_4$-Alkylgruppe bedeuten, eignen sich als flammhemmende Zusätze für Kunststoffe, insbesondere für Epoxidharze. Bei der Umsetzung des Diphosphits mit einem Überschuss eines Diepoxids werden Epoxidharze mit chemisch gebundenem Phosphor erhalten, welche nach der Härtung flammfeste, vernetzte Produkte mit guten Eigenschaften liefern.

EP 0 420 811 A2

## PHOSPHORHALTIGE COPOLYMERE UND DEREN VERWENDUNG

Die Erfindung betrifft phosphorhaltige Copolymere erhältlich durch Umsetzung von Epoxidverbindungen mit bestimmten Dialkylpentaerythritdiphosphiten, ein Verfahren zu deren Herstellung und deren Verwendung, insbesondere als flammhemmende Zusätze für Epoxidharze oder als phosphorhaltige Epoxidharze, welche nach der Härtung flammfeste vernetzte Produkte mit guten Eigenschaften liefern.

Dialkyl- und Diarylpentaerythritdiphosphite, d.h. 3,9-Dialkoxy- bzw. 3,9-Diaryloxy-2,4,8,10-tetraoxa-3,9-diphosphaspiro[5,5]undekane, sind bekannt. Die US 2,847,443 beschreibt z.B. Umsetzungsprodukte von Triarylphosphiten mit Pentaerythrit, darunter auch Diarylpentaerythritdiphosphite, welche als Stabilisatoren für halogenhaltige Polymere oder Elastomere, oder als Öladditive verwendet werden. Die US 3,047,608 beschreibt ein Verfahren für die Herstellung von tertiären Phosphiten hochsiedender Alkohole. Dabei wird neben einer Vielzahl von Phosphiten auch die Herstellung von Dialkylpentaerythritdiphosphiten erwähnt, sowie die weitere Verarbeitung dieser Verbindungen in Gegenwart eines Katalysators zu Polymeren, z.B. durch Umsetzung mit geeigneten zweiwertigen Alkoholen. Die so hergestellten Phosphite bzw. Diphosphite eignen sich angeblich als Stabilisatoren für Polyolefine oder Polyurethane, als Flammschutzmittel für Cellulose und Celluloseester oder auch als Härtungsmittel für Epoxidharze, wobei keine dieser Anwendungen offenbart ist.

Die GB 1,439,092 beschreibt sterisch gehinderte Phenol-Pentaerythrit-Phosphonate, hergestellt beispielsweise durch Umsetzung von Pentaerythritdiphosphiten mit Derivaten sterisch gehinderter Phenole. Diese Phosphonate eignen sich als phenolische Antioxidantien für eine Vielzahl von verschiedenartigen Kunststoffen, darunter auch für Epoxidharze.

Die JP-OS Sho 53-71,153/78 beschreibt Stoffgemische enthaltend chlorhaltige Kunststoffe, wie PVC, ein Phosphit, wie z.B. ein Dialkylpentaerythritdiphosphit, ein Mono-oder Dialkylhydrogenphosphit und ein niedermolekulares Epoxidharz.

Die JP-OS Sho 46-20,825/71 beschreibt die Umsetzung von Epoxidverbindungen mit mindestens 2 Epoxidgruppen mit Verbindungen, welche mindestens 2 Hydrophosphoryl- oder Phosphonylgruppen enthalten, in Gegenwart eines Katalysators ausgewählt aus der Gruppe Alkalimetalle, Erdalkalimetalle und Amalgame sowie Organometallverbindungen dieser Metalle. In einem Beispiel wird Bisphenol A-diglycidylether mit einer äquimolaren Menge von Pentaerythritdiphosphit in Gegenwart von Natrium als Katalysator zu einem phosphorhaltigen, nicht brennbaren Polymer umgesetzt. Polymere erhalten durch Umsetzung von Dialkylphosphiten, inklusive Pentaerythritdiphosphit, vermögen aber den Anforderungen an Kunststoffe, insbesondere bezüglich der Wasserbeständigkeit, nicht zu genügen.

Gegenstand vorliegender Erfindung sind phosphorhaltige Copolymere erhältlich durch Umsetzung einer Epoxidverbindung mit einem Dialkylpentaerythritdiphosphit der Formel I

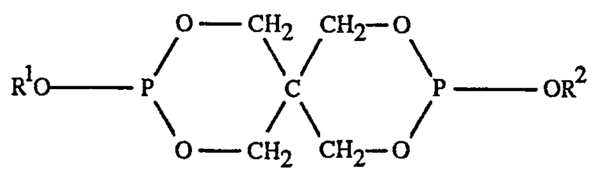

(I),

worin $R^1$ und $R^2$ unabhängig voneinander eine $C_1$-$C_4$-Alkylgruppe bedeuten.

Dialkylpentaerythritdiphosphite der Formel I sind z.B. aus der erwähnten US 3,047,608 bekannt. Sie werden im allgemeinen durch Umsetzung eines geeigneten Trialkylphosphits mit Pentaerythrit in Gegenwart eines Katalysators, wie z.B. Dialkylphosphite, Natriumalkoholate oder tertiäre Amine, hergestellt.

Es wurde nun gefunden, dass besonders gute, monomere Produkte erhalten werden, wenn die Umsetzung in Toluol oder Xylol durchgeführt wird. Gegenstand der Erfindung ist somit auch ein Verfahren zur Herstellung der Dialkylpentaerythritdiphosphite der Formel I durch Umesterung eines Trialkylphosphits, wobei die Alkylgruppen 1-4 C-Atome aufweisen, mit Pentaerythrit in Gegenwart eines Katalysators, dadurch gekennzeichnet, dass die Umesterung in Toluol oder Xylol bei Rückflusstemperatur ausgeführt wird und das während der Reaktion gebildete Alkanol als Azeotrop mit Toluol oder Xylol abdestilliert wird.

Die Umsetzung kann mit einem einzigen oder mit einem Gemisch von Trialkylphosphiten durchgeführt werden. Geeignete Trialkylphosphite sind Verbindungen, worin die Alkylgruppen Methyl, Ethyl, n- und iso-Propyl und n-, sec- und tert-Butyl bedeuten. Geeigneterweise kann das während der Umsetzung gebildete Alkanol/Toluol- bzw. -Xylolazeotrope Gemisch über den Kopf einer Kolonne abdestilliert werden. Das so erhaltene monomere Dialkylpentaerythritdiphosphit kann, z.B. nachdem es aus dem Reaktionsgemisch

auskristallisiert hat, isoliert werden, oder in Lösung gleich weiter zu einem geeigneten Copolymeren umgesetzt werden. Da diese Monomeren selbst bei Raumtemperatur nur beschränkt beständig sind und polymerisieren, ist das letztgenannte Verfahren besonders zweckmässig.

Für die Herstellung der Diphosphite besonders geeignete Katalysatoren sind $C_1$-$C_4$-Dialkylphosphite, Natriumalkoholate mit 1-4 C-Atomen oder Triethylamin. Bei Verwendung der Dialkylphosphite oder der Natriumalkoholate als Katalysatoren werden vorzugsweise Verbindungen mit der gleichen Alkylgruppe eingesetzt wie die Alkylgruppe des Trialkylphosphit-Edukts, das mit Pentaerythrit umgeestert wird. Der Katalysator wird vorzugsweise in einer Menge von 0,5-5 Gew. %, insbesondere 1-3 Gew. %, bezogen auf die Gesamtmenge des Trialkylphosphits und des Pentaerythrits, eingesetzt.

Vorzugsweise wird bei der Herstellung der Diphosphite der Formel I Pentaerythrit mit einem einzigen Trialkylphosphit umgesetzt, so dass Diphosphite der Formel I entstehen, worin die Reste $R^1$ und $R^2$ gleich sind. Besonders geeignet sind Diphosphite, worin $R^1$ und $R^2$ n-Butyl und insbesondere Methyl bedeuten.

Bei der Herstellung der erfindungsgemässen phosphorhaltigen Copolymere kann im Prinzip jede beliebige Epoxidverbindung eingesetzt werden. Es können sowohl Mono- als auch Di- oder Polyepoxide verwendet werden. Vorzugsweise werden dabei 0,05 bis 5 Mol, insbesondere 0,1 bis 2,5 Mol, Diphosphit pro Mol der Epoxidverbindung eingesetzt. Je nach Mengenverhältnis der Epoxidverbindung und des Diphosphits können somit Copolymere mit sehr unterschiedlichen Eigenschaften, wie z.B. verschiedenem Molekulargewicht oder Phosphorgehalt, erhalten werden.

Bei Verwendung eines Überschusses bis zu einer äquimolaren Menge des Diphosphits entstehen thermoplastische Oligomere oder Polymere, welche einen relativ hohen Phosphorgehalt aufweisen und sich als flammhemmende Zusätze für Kunststoffe, insbesondere für Epoxidharze, eignen. Die Verwendung solcher Copolymerer statt des nicht umge setzten Diphosphits als Flammschutzmittel bringt den Vorteil einer wesentlich einfacheren und sichereren Handhabung, da die Spiro-Diphosphite für sich alleine oder mit Epoxiden in stark exothermer Reaktion und schlecht kontrollierbar polymerisieren.

Wenn bei der Umsetzung ein Überschuss einer Di- oder Polyepoxidverbindung relativ zum Diphosphit, z.B. 2-10 Mol Epoxy-Comonomer pro Mol Diphosphit, eingesetzt wird, werden vorverlängerte Epoxidharze mit chemisch gebundenem Phosphor erhalten. Diese Epoxidharze ergeben nach der Härtung vernetzte Produkte, die unbrennbar oder selbstverlöschend sind und keine Halogenatome enthalten. Bekannterweise sind die Nachteile, welche halogenhaltige flammfest ausgerüstete Harze mit sich bringen, z.B. Korrosionsschäden, insbesondere in der Elektrotechnik und Elektronik unerwünscht.

Die erfindungsgemässen Copolymere werden geeigneterweise durch Erhitzen des Reaktionsgemisches bei einer Temperatur von 80 bis 220 °C, vorzugsweise bei 100 bis 200 °C, hergestellt. Die Umsetzung kann, falls zweckmässig, in einem geeigneten Lösungsmittel durchgeführt werden. Beispiele geeigneter Lösungsmittel sind Toluol und Xylol. Nach Abschluss der Reaktion wird das Lösungsmittel abdestilliert. Vorzugsweise werden die erfindungsgemässen Copolymere aber durch Erhitzen des Epoxids und des Diphosphits ohne Lösungsmittel hergestellt. Die Reaktionszeit kann dabei je nach gewünschtem Produkt stark variieren, beispielsweise von einigen Minuten bei der Vorverlängerung reaktiver Epoxidharze bis zu mehreren Stunden, z.B. 15 Stunden oder mehr, bei der Herstellung thermoplastischer Copolymere mit hohem Phosphorgehalt. Gegenstand der Erfindung ist somit auch ein Verfahren zur Herstellung der erfindungsgemässen Copolymere.

Die Herstellung der erfindungsgemässen Copolymere erfolgt vorzugsweise in einem Reaktionsmedium, in dem keine chlorhaltigen Kunststoffe, wie PVC, enthalten sind.

Die erfindungsgemässe Copolymerisation von Epoxidverbindungen mit den Spirodiphosphiten der Formel I verläuft gemäss $^{31}$P-NMR unter Wertigkeitsänderung von $P^{III}$ zu $P^{V}$ und unter Öffnung eines Dioxaphosphacyclohexanringes des Diphosphits, so dass dabei Phosphor in Phosphonatform chemisch in die Copolymere eingebaut wird. So eine Umsetzung von Diphosphiten mit Epoxidverbindungen war nicht vorauszusehen.

In einer bevorzugten Ausführungsform der vorliegenden Erfindung werden die erfindungsgemässen Copolymere durch Umsetzung von Monoepoxiden mit den Diphosphiten hergestellt. Bevorzugte Monoepoxide sind Alkylglycidylether, wie z.B. Butyl- oder Ethyl hexylglycidylether, Arylglycidylether, wie z.B. Phenyl-, Kresyl- oder p-t-Butylphenylglycidylether oder epoxidierte Olefine, wie z.B. Styroloxid oder Cyclohexenoxid.

Besonders bevorzugte Monoepoxide sind n-Butylglycidylether, Cyclohexenoxid, Styroloxid oder insbesondere Phenylglycidylether. Besonders bevorzugt werden erfindungsgemässe phosphorhaltige Copolymere, welche durch Umsetzung von einem Mol des Diphosphits pro Mol des Monoepoxids hergestellt werden.

In einer anderen bevorzugten Ausführungsform der vorliegenden Erfindung werden die erfindungsgemässen Copolymere durch Umsetzung von Epoxidharzen mit den Diphosphiten hergestellt.

Bei der Umsetzung kann als Epoxidharz im Prinzip jede in der Technik der Epoxidharze übliche Verbindung eingesetzt werden. Bevorzugt werden Epoxidharze mit im Durchschnitt mindestens zwei

Epoxidgruppen pro Molekül.

Beispiele für Epoxidharze sind:

I) Polyglycidyl- und Poly-($\beta$-methylglycidyl)-ester erhältlich durch Umsetzung einer Verbindung mit mindestens zwei Carboxylgruppen im Molekül und Epichlorhydrin bzw. $\beta$-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly($\beta$-methylglycidyl)ether erhältlich durch Umsetzung einer Ver bindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan oder sie besitzen aromatische Kerne, wie N,N-Bis(2-hydroxyethyl)anilin oder p,p′-Bis(2-hydroxyethylamino)diphenylmethan.

Die Epoxidverbindungen können sich auch von einkernigen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis-(4-hydroxyphenyl)ethan, 2,2-Bis(4-hydroxyphenyl)propan, 2,2-Bis(3,5-dibrom-4-hydroxyphenyl)propan sowie von Novolaken erhältlich durch Kondensation von Aldehyden wie Formaldehyd, Acetaldehyd, Chloral oder Furfuraldehyd mit Phenolen wie Phenol, oder mit Phenolen, die im Kern mit Chloratomen oder $C_1$-$C_9$Alkylgruppen substituiert sind, wie beispielsweise 4-Chlorphenol, 2-Methylphenol oder 4-tert-Butylphenol oder durch Kondensation mit Bisphenolen, so wie oben beschrieben.

III) Poly(N-glycidyl) Verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis-(4-methylaminophenyl)methan.

Zu den Poly(N-glycidyl) Verbindungen zählen aber auch Triglycidylisocyanurat, N,N′-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl) Verbindungen, beispielsweise Di-S-glycidylderivate, die sich von Dithiolen, wie beispielsweise Ethan-1,2-dithiol oder Bis(4-mercaptomethylphenyl)ether ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan, 3,4-Epoxycyclohexylmethyl-3′,4′-epoxycyclohexancarboxylat oder Bis(3,4-epoxycyclohexylmethyl)ester von aliphatischen Dicarbonsäuren, wie Bis(3,4-epoxycyclohexylmethyl)adipat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N′-(2-glycidyloxypropyl)-5,5-dimethylhydantoin oder 2-Glycidyloxy- 1,3-bis (5,5-dimethyl-1-glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharze werden Polyglycidylether von acyclischen Alkoholen, wie von 1,1,1-Trimethylolpropan, von Bisphenolen, wie beispielsweise von 2,2-Bis(4-hydroxyphenyl)propan

(Bisphenol A) oder Bis(4-hydroxyphenyl)methan (Bisphenol F), oder von Novolaken, die durch Umsetzung von Formaldehyd mit einem Phenol gebildet werden, sowie N-glycidylierte aromatische Amine, insbesondere tetraglycidyliertes Bis(4-aminophenyl)methan. Ganz besonders geeignete Epoxidharze sind Bisphenol A-diglycidylether, Epoxy-Novolake oder Glycidylether von 1,1,1-Trimethylolpropan. Besonders bevorzugt werden Copolymere hergestellt durch Umsetzung von Bisphenol A-diglycidylethern, Epoxy-Novolaken oder Glycidylethern von 1,1,1-Trimethylolpropan mit Dimethylpentaerythritdiphosphit.

Bei der Umsetzung von Epoxidharzen mit den Diphosphiten werden vorzugsweise 0,1 bis 1 Mol Diphosphit pro Epoxidäquivalent des Epoxidharzes eingesetzt. Besonders bevorzugt werden die Mengen des Diphosphits und des Epoxidharzes so gewählt, dass ein phosphorhaltiges Epoxidharz mit 2 bis 10 Gew. % Phosphor entsteht.

Wie weiter oben ausgeführt, eignen sich die erfindungsgemässen Copolymere als flammhemmende Zusätze für Kunststoffe, insbesondere für Epoxidharze. Gegenstand der Erfindung sind somit auch Stoffgemische enthaltend (a) ein erfindungsgemässes phosphorhaltiges Copolymer und (b) ein Epoxidharz. Als Komponente (a) besonders geeignet sind Copolymere mit einem hohen Phosphorgehalt, z.B. mit mindestens 10 Gew. % P. Als Komponente (b) der erfindungsgemässen Stoffgemische sind z.B. alle weiter oben beschriebenen Epoxidharze geeignet. Die erfindungsgemässen Stoffgemische können mit den üblichen Härtern für Epoxidharze in vernetzte Produkte übergeführt werden. Die relativen Mengen der Komponenten (a) und (b) der Stoffgemische werden vorzugsweise so gewählt, dass das nach der Härtung erhaltene vernetzte Produkt nicht brennbar oder selbstverlöschend ist.

Wie gesagt werden bei der Verwendung eines Überschusses von Epoxidharz relativ zum Diphosphit bei der Herstellung der erfindungsgemässen Copolymere phosphorhaltige Epoxidharze erhalten. Ein weiterer Gegenstand der Erfindung sind somit auch härtbare Stoffgemische enthaltend (a) ein erfindungsgemässes phosphorhaltiges Epoxidharz und (c) ein Härtungsmittel für Epoxidharze.

Als Beispiele für Härtungsmittel seien die gebräuchlichen Härtungsmittel für Epoxidharze genannt, einschliesslich der aliphatischen, cycloaliphatischen, aromatischen und heterocyclischen Amine, wie Bis(4-aminophenyl)methan, Anilin-Formaldehyd-Harze, Bis(4-aminophenyl)sulfon, Propan-1,3-diamin, Hexamethylendiamin, Diethylentriamin, Triethylentetramin, 2,2,4-Trimethylhexan-1,6-diamin, m-Xylylendiamin, Bis(4-aminocyclohexyl)methan, 2,2-Bis(4-aminocyclohexyl)propan und 3-Aminomethyl-3,5,5-trimethylcyclohexylamin (Isophorondiamin), Polyaminoamide, wie beispielsweise solche aus aliphatischen Polyaminen und dimerisierten oder trimerisierten Fettsäuren, Polyphenole, wie Resorcin, Hydrochinon, 2,2-Bis(4-hydroxyphenyl)propan und Phenol-Aldehyd-Harze, Polythiole, wie die im Handel unter der Bezeichnung "Thiokole" erhältlichen Polythiole, Polycarbonsäuren und ihre Anhydride, wie zum Beispiel Phthalsäureanhydrid, Tetrahydrophthalsäureanhydrid, Hexahydrophthalsäureanhydrid, Hexachlorendomethylentetrahydrophthalsäureanhydrid, Pyromellitsäuredianhydrid, Benzophenon-3,3,4′,4′-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise Zinnsalze von Alkansäuren (zum Beispiel Zinnoctanoat), Friedel-Crafts-Katalysatoren, wie Bortrifluorid und Bortrichlorid und ihre Komplexe und Chelate, die durch Umsetzung mit Bortrifluorid mit zum Beispiel Aminen oder 1,3-Diketonen erhalten werden. Geeignete Härtungsmittel sind auch die Cyanoguanidine gemäss den EP-A 306,451 und EP-A 310,545.

Bevorzugte Härtungsmittel sind aromatische Amine, insbesondere Bis(4-aminophenyl)methan oder Bis-(4-aminophenyl)sulfon, Bortrifluorid-Amin-Komplexe, insbesondere der $BF_3$-Ethylaminkomplex, Dicyandiamid, die oligomeren Cyanoguanidine gemäss der EP-A 306,451 und Polyaminoamide.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann leicht ermittelt werden. Wenn das Härtungsmittel ein Amin ist, werden normalerweise 0,75 bis 1,25 Aequivalente Aminwasserstoff pro 1 Epoxidäquivalent eingesetzt. Wenn Polycarbonsäuren oder ihre Anhydride eingesetzt werden, verwendet man gewöhnlich 0,4 bis 1,1 Aequivalente Carboxylgruppe bzw. Anhydridgruppe pro 1 Aequivalent Epoxidgruppe. Bei der Verwendung von Polyphenolen als Härtungsmittel setzt man zweckmässig 0,75 bis 1,25 phenolische Hydroxylgruppen pro 1 Epoxidäquivalent ein.

Katalytisch wirkende Härtungsmittel werden allgemein in Mengen von 1 bis 40 Gewichtsteilen pro 100 Gewichtsteile Epoxidharz eingesetzt.

Gewünschtenfalls kann man den härtbaren Gemischen zur Herabsetzung der Viskosität aktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Man kann bei der Härtung ausserdem Härtungsbeschleuniger einsetzen; solche Beschleuniger sind z.B.

tertiäre Amine, deren Salze oder quaternäre Ammoniumverbindungen, z.B. Benzyldimethylamin, 2,4,6-Tris-(dimethylaminomethyl)phenol, 1-Methylimidazol, 2-Ethyl-4-methylimidazol, 4-Aminopyridin, Tripentylammoniumphenolat; oder Alkalimetallalkoholate, wie z.B. Na-Alkoholate von 2,4-Dihydroxy-3-hydroxymethylpentan. Die Härtung der erfindungsgemässen Mischungen wird zweckmässig im Temperaturintervall von 50 °C bis 300 °C, bevorzugt von 80-250 °C, insbesondere von 120-200 °C, durchgeführt.

Die Härtung kann gewünschtenfalls auch derart in 2 Stufen erfolgen, dass die Härtungs reaktion zunächst vorzeitig abgebrochen bzw. die erste Stufe bei wenig erhöhter Temperatur durchgeführt wird, wobei ein noch schmelzbares und/oder lösliches, härtbares Vorkondensat (sogenannte "B-Stufe") aus der Epoxidkomponente und dem Härter erhalten wird. Ein derartiges Vorkondensat kann z.B. zur Herstellung von "Prepregs", Pressmassen oder Sinterpulvern dienen.

Der Ausdruck "Härten", wie er hier gebraucht wird, bedeutet die Umwandlung der löslichen, entweder flüssigen oder schmelzbaren Polyepoxide in feste, unlösliche und unschmelzbare, dreidimensional vernetzte Produkte bzw. Werkstoffe, und zwar in der Regel unter gleichzeitiger Formgebung zu Formkörpern, wie Giesskörpern, Presskörpern und Schichtstoffen, zu Imprägnierungen, Beschichtungen, Lackfilmen oder Verklebungen.

Die erfindungsgemässen härtbaren Gemische können ferner geeignete Weichmacher, wie Dibutylphthalat, Dioctylphthalat oder Trikresylphthalat, enthalten.

Als weitere übliche Zusätze können die erfindungsgemässen Gemische ferner Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die erfindungsgemässen Gemische lassen sich beispielsweise als Klebstoffe, Klebefilme, Patches, Matrixharze, Lacke oder Dichtungsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze, Matrixharze und Klebemittel verwendet werden.

Besonders geeignet sind die erfindungsgemässen Stoffgemische als Giessharze und Imprägnierharze für die Herstellung von Formkörpern bzw. von Prepregs, Laminaten und Composites mit selbstverlöschenden Eigenschaften. Gegenstand der Erfindung sind auch vernetzte Produkte erhältlich durch Härtung der erfindungsgemässen Stoffgemische mit einem Härtungsmittel für Epoxidharze sowie vernetzte Produkte erhältlich durch Härtung der erfindungsgemässen härtbaren Stoffgemische.

Die folgenden Beispiele erläutern die Erfindung.

Beispiel 1: Herstellung von monomerem, kristallisierten 3,9-Dimethoxyphospha-2,4,8,10-tetraoxaspiro[5,5]-undecan (Dimethylpentaerythritdiphosphit)

In einem 2,5 l Rührkolben, versehen mit einem Thermometer und einer Kolonne (L = 55 cm, d = 3 cm), die mit Zylinderchen aus Drahtnetz (h = 3 mm, d = 3mm) gefüllt ist, erhitzt man unter Rühren zum Sieden:

372,8 g (3 Mol) Trimethylphosphit,
5,44 g (0,0495 Mol) Dimethylphosphit,
204,2 g (1,5 Mol) Pentaerythrit und
1200,0 ml Toluol.

Während 5 h werden bei einer Innentemperatur von 93-100 °C am Kolonnenkopf zwischen 60 und 62 °C 260 g eines Destillats abgenommen, das aus 72,23 % Methanol und 27,77 % Toluol besteht. Nach 3 Stunden Reaktionszeit ist das Pentaerythrit total in Lösung gegangen. Nach dem Abkühlen bildet sich über Nacht eine grosse Menge weisser Kristalle, die abgesaugt und mit kaltem Toluol und danach mit Hexan gewaschen und in einem trockenen Luftstrom bei 35 °C getrocknet werden. Ausbeute: 222,7 g entsprechend 58 % der Theorie. Fp = 121,1 °C.

| Elementaranalyse: | Berechnet für $C_7H_{14}O_6P_2$: | Gefunden: |
|---|---|---|
| %C: | 32,83 | 32,89 |
| %H: | 5,51 | 5,54 |
| %P: | 24,19 | 24,15 |
| Molgewicht: | 256 | 255 (GPC) |
| Reinheit (Mettler TA 3000) 98,34% Gemäss $^{31}$P-NMR liegt der Phosphor vollständig in 3-wertiger Form vor. | | |

Beim Erhitzen über den Schmelzpunkt bildet sich in stark exothermer Reaktion ($\Delta H$ = 389,6 J/g) ein glasiges Polymer. Auch bei der Lagerung bei Zimmertemperatur werden die Kristalle klebrig und gehen in ölige bis harzartige Produkte über.

Beispiel 2: Herstellung von 3,9-Dibutoxyphospha-2,4,8,10-tetraoxaspiro[5,5]-undecan (Dibutylpentaerythritdiphosphit)

Unter einer Destillierkolonne erhitzt man unter Rühren zum Sieden:
158,2 g Tri-n-butylphosphit (95 %ig),
5,0 g Di-n-butylphosphit,
40,8 g Pentaerythrit und
500 ml Xylol.

Im Laufe von 10 Stunden nimmt man über Kopf 337,5 g Destillat ab, das bei 75-80 °C übergeht, Brechungszahlen $n_D^{20}$ zwischen 1,435 und 1,484 hat und total 92,1 g n-Butanol enthält. Da das Produkt auch bei tiefer Temperatur nicht auskristallisiert, destilliert man das Lösungsmittel am Rotationsverdampfer bei 80 °C/15-0,1 mmHg (2kPa - 13Pa) ab. Es hinterbleiben 108 g eines farblosen Öls mit einer Viskosität von 58,4 mPas bei 25 °C und einem Brechungsindex von 1,4680 bei 25 °C.

| Elementaranalyse: | Berechnet für $C_{13}H_{26}O_6P_2$: | Gefunden: |
|---|---|---|
| %C: | 46,89 | 47,18 |
| %H: | 7,70 | 7,95 |
| %P: | 18,21 | 17,00 |

Beispiel 3: Copolymer aus Spiro-diphosphit gemäss Beispiel 1 und Phenylglycidylether

4,491 g (0,03 Mol) Phenylglycidylether und
7,68 g (0,03 Mol) Spiro-diphosphit gemäss Beispiel 1 werden zusammengeschmolzen und in einer verschlossenen Ampulle während 12 Stunden auf 160 °C erhitzt. Das viskose Harz enthält noch 0,16 Epoxyäquivalente pro kg. Mittels Gelpermeationschromatographie werden $\overline{M}_n$ = 1640 und $\overline{M}_w$ = 9170 bestimmt.

Weiteres Erhitzen während 10 Stunden auf 200 °C ergibt ein braunes, festes Polymer mit einer Glasumwandlungstemperatur von 58 °C, das in Tetrahydrofuran und in Dimethylformamid löslich ist.

| Elementaranalyse: | Berechnet für $(C_{16}H_{26}O_8P_2)_n$: | Gefunden: |
|---|---|---|
| %C: | 47,29 | 47,60 |
| %H: | 6,42 | 6,30 |
| %P: | 15,27 | 15,05 |

$\overline{M}_n$ (GPC) = 3420
$\overline{M}_w$ (GPC) = 403800

Beispiel 4: Copolymer aus Bisphenol A-diglycidylether und Spiro-diphosphit gemäss Beispiel 1 (Molverhältnis 1:1)

7,68 g (0,03 Mol) Spiro-diphosphit gemäss Beispiel 1 und
10,48 g (0,03 Mol) Bisphenol A-diglycidylether (Epoxidäquivalentgewicht = 174,8) werden 3 Stunden bei 120 °C, 2 Stunden bei 150 °C, 2 Stunden bei 170 °C und 8 Stunden bei 200 °C copolymerisiert. Hierbei wird eine Wärmemenge von 463 J/g entwickelt, die Spitzentemperatur beträgt 228 °C (Mettler TA 3000). Es wird ein glasiges Copolymer mit einer Glasumwandlungstemperatur von 35,8 °C und einem Erweichungspunkt, gemessen auf der Koflerbank, von 84 °C erhalten.
$\overline{M}_n$ (GPC) = $1,37 \times 10^4$, $\overline{M}_w$ (GPC) = $1,43 \times 10^6$.

Beispiel 5: Copolymer aus Bisphenol A-diglycidylether und Spiro-diphosphit gemäss Beispiel 1 (Molverhältnis 2:1)

10,24 g (0,04 Mol) Spiro-diphosphit gemäss Beispiel 1 und
6,96 g (0,02 Mol) Bisphenol A-diglycidylether (Epoxidäquivalentgewicht = 174,8) werden nach einem Temperaturprogramm wie im Beispiel 4 copolymerisiert.
$\Delta H$ = 400 J/g, $T_{max.}$ = 207 °C, $\overline{M}_n$ (GPC) = $1,76 \times 10^4$, $\overline{M}_w$(GPC) = $9,64 \times 10^5$, $T_G$ = 28,1 °C, Erweichungspunkt = 77 °C.

Beispiel 6: Phosphorhaltiges Epoxidharz A

1000 g eines bei Raumtemperatur flüssigen Epoxyharzes auf Basis von Bisphenol A mit einem Epoxidäquivalentgewicht von 190 werden unter Stickstoffatmosphäre auf 170 °C erhitzt. Man trägt unter Rühren 143,67 g Spiro-diphosphit (gemäss Beispiel 1) portionenweise während 45 Minuten ein, erhitzt weitere 15 Minuten auf 170 °C und kühlt auf Zimmertemperatur ab. Man erhält ein dunkelbraunes Harz mit einem Gehalt von 3,0 Gew. % P, einem Epoxidäquivalentgewicht von 245, $\overline{M}_n$ (GPC) = 506, $\overline{M}_w$ (GPC) = 579.

| Härtungsversuche | | | |
|---|---|---|---|
| Formulierung Nr. | 6a | 6b | 6c |
| Phosphorhaltiges Harz A (g) | 17,5 | 21,4 | 22,5 |
| Bisphenol A-diglycidylether (Epoxidäquivalentgewicht: 190) | 4,0 | - | - |
| 4,4′-Diamino-diphenylmethan (g) | 4,55 | - | - |
| 4,4′-Diamino-diphenylsulfon (g) | - | 6,2 | - |
| $BF_3$-Ethylaminkomplex (g) | - | - | 2,5 |

Härtung während 2 Stunden 125 °C, 2 Stunden 160 °C und 2 Stunden 180 °C ergibt einwandfreie, braune, zähe Platten.

| Formulierung Nr. | 6a | 6b | 6c |
|---|---|---|---|
| $T_G$ (Mettler TA 3000) (°C) | 149 | 160 | 140 |
| Wasseraufnahme (%) | | | |
| nach 4 Tagen bei 25°C:<br>nach 1 Stunde bei 100°C: | 0,41<br>0,47 | 0,61<br>0,67 | 0,47<br>0,84 |
| Gewichtsverlust (TGA) | | | |
| 5% bei °C<br>10% bei °C<br>Brennbarkeit nach UL 94 | 270<br>305<br>VO | 290<br>315<br>VO | 280<br>310<br>VO |

Beispiel 7: Phosphorhaltiges Epoxidharz B

1000 g eines bei Raumtemperatur zähflüssigen Epoxynovolaks mit einem Epoxidäquivalentgewicht von 179,2 werden mit 144,9 g Spiro-diphosphit gemäss Beispiel 1 während 1 Stunde bei 175°C umgesetzt. Man erhält ein dunkelbraunes Harz mit einem Gehalt von 3,04 Gew.% P, einer Viskosität von 256,4 mPas bei 80°C, einem Epoxidäquivalentgewicht von 241, $\overline{M}_n$ (GPC) = 486 und $\overline{M}_w$ (GPC) = 634.

Die Härtung erfolgt wie im Beispiel 6.

| Formulierung Nr. | 7a | 7b | 7c |
|---|---|---|---|
| Phosphorhaltiges Harz A (g)<br>Epoxynovolak (Epoxidäquivalentgewicht 179,2)<br>4,4′-Diaminodiphenylmethan (g)<br>4,4′-Diaminodiphenylsulfon (g)<br>$BF_3$-Ethylaminkomplex (g)<br>Gew. % P (bezogen auf Harz + Härter)<br>$T_G$(Mettler TA 3000) (°C) | 23,04<br>5,0<br>6,33<br>-<br>-<br>2,0<br>147,5 | 23,04<br>5,0<br>-<br>7,9<br>-<br>1,92<br>144,1 | 23,04<br>10,00<br>-<br>-<br>0,8<br>2,0<br>127,8 |
| Wasseraufnahme (%) | | | |
| nach 4 Tagen bei 25°C:<br>nach 1 Stunde bei 100°C: | 0,35<br>0,39 | 0,36<br>0,59 | 0,39<br>0,62 |
| Gewichtsverlust (TGA) | | | |
| 5 % bei °C<br>10 % bei °C<br>Brennbarkeit nach UL 94 | 270<br>310<br>VO | 295<br>320<br>VO | 315<br>340<br>VO |

Beispiel 8: Phosphorhaltiges Epoxidharz C

Man setzt 70,0 g N,N′-Tetraglycidyl-diaminodiphenylmethan mit 30,0 g Spiro-diphosphit gemäss Beispiel 1 während 15 Minuten bei 170°C um. Man erhält ein braunes Copolymer mit einem Epoxidäquivalentgewicht von 256 und einem Phosphorgehalt von 7,25 Gew. %.

100 Gewichtsteile Kohlefaser-Prepreg, Fiberdux® 914 (Ciba-Geigy) werden mit 7,2 Gewichtsteilen des obigen Copolymers modifiziert. Aus je 3 Lagen des modifizierten und des unmodifizierten Prepregs werden Kohlefaserlaminate während 2 Stunden bei 175°C und 7 bar gepresst und 4 Stunden bei 190°C nachgehärtet.

| Eigenschaften: | Laminat aus | |
|---|---|---|
| | Fiberdux®914 | |
| | nicht-modifiziert | modifiziert |
| Dicke (mm) | 0,85 | 0,55 |
| Faservolumen (%) | 57,0 | 57,0 |
| $T_G$ (TMA) (°C) | 197 | 210 |
| Interlaminare Scherfestigkeit | | |
| MPa bei 25°C | 71 | 64 |
| MPa bei 120°C | 51 | 51 |
| Biegefestigkeit (DIN 29971) MPa | 765 | 650 |
| Biegemodul (DIN 29971) GPa | 63,0 | 59,1 |
| Wasserabsorption nach 14 Tagen bei 71°C(%) | 2,0 | 2,3 |
| Brennbarkeit nach FAR 25,853 a: | | |
| Brandlänge (mm) nach 12 Sekunden Beflammung | 140 | 61 |
| Auslöschung nach Sekunden | 19 | 8 |
| Brandlänge (mm) nach 60 Sekunden Beflammung | 230 | 160 |
| Auslöschung nach Sekunden | 45 | 42 |
| Flammentemperatur (°C) | 910 | 920 |

Beispiel 9: Phosphorhaltiges Epoxidharz D

473,7 g eines technischen Triglycidylethers von Trimethylolpropan mit einem Epoxidäquivalentgewicht von 121 und einer Viskosität von 183 mPa•s werden unter Rühren auf 160°C erwärmt. Man trägt portionenweise 126,3 g Spiro-diphosphit gemäss Beispiel 1 ein und lässt 2 Stunden bei 170-175°C nachreagieren. Man erhält 583,90 g eines hellgelben Harzes mit einem Phosphorgehalt von 5,0 %, einem Epoxidäquivalentgewicht von 204 und einer Viskosität von 2,38 Pa•s. $\overline{M}_n$ = 522, $\overline{M}_w$ = 970.

Werden 100g obigen phosphonylierten Harzes, 100 g $Al(OH)_3$ und 78 g eines Polyaminoamid-Härters (HV 953 U von Ciba-Geigy) vermischt und 16 Stunden bei 40°C und 3 Stunden bei 100°C gehärtet, so erhält man Formkörper, die nach UL-94 unbrennbar sind (V-0, Nachbrennzeit: 0 sec.)

Beispiel 10: Verwendung eins phosphorhaltigen Copolymers als Flammschutzmittel für Epoxidharze

| Beispiel Nr. | | 10a | 10b | 10c |
|---|---|---|---|---|
| Copolymer gem. Beispiel 4 (g) | | 5,95 | 5,95 | 6,80 |
| Diglycidylether von Bisphenol A (g) | | 12,05 | 11,55 | 13,20 |
| 4,4'-Diaminodiphenylmethan (g) | | 8,16 | - | - |
| Cyanoguanidin/Dicyandiamid-härter 1) (g) | | - | 3,00 | - |
| 4,4'-Diaminodiphenylsulfon (g) | | - | - | 11,28 |
| Härtung während 2h bei 125, 2h bei 160 und 2h bei 180°C | | | | |
| Glasumwandlungstemperatur (°C) | | 119 | 134 | 126 |
| Wasseraufnahme (%) | 4d 25°C | 0,31 | 0,49 | 0,42 |
| | 1h 100°C | 0,75 | 0,74 | 1,16 |
| DTA: 5 % Gew.Verlust bei °C | | 250 | 285 | 285 |
| 10 % Gew.Verlust bei °C | | 390 | 360 | 320 |
| Brennbarkeit gem. UL 94; Stufe | | VO | VO | VO |

1) Pulvergemisch aus 75 Gewichtsteilen eines oligomeren Cyanoguanidins der Formel

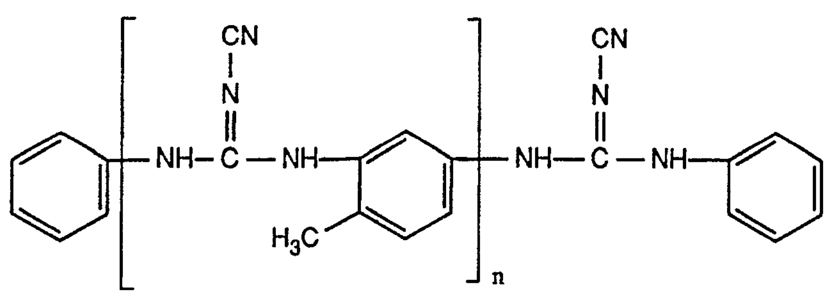

,

hergestellt gemäss Beispiel 3 der EP-A 306,451, und 25 Gewichtsteilen Dicyandiamid.

**Ansprüche**

1. Phosphorhaltiges Copolymer erhältlich durch Umsetzung einer Epoxidverbindung mit einem Dialkylpentaerythritdiphosphit der Formel I

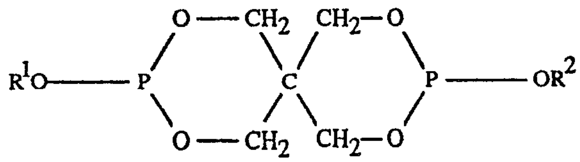

(I),

worin $R^1$ und $R^2$ unabhängig voneinander eine $C_1$-$C_4$-Alkylgruppe bedeuten.

2. Copolymer nach Anspruch 1, worin $R^1$ und $R^2$ gleich sind, und vorzugsweise n-Butyl oder insbesondere Methyl bedeuten.

3. Copolymer nach Anspruch 1 oder 2, worin 0,05 bis 5 Mol, vorzugsweise 0,1 bis 2,5 Mol, Diphosphit pro Mol der Epoxidverbindung eingesetzt werden.

4. Copolymer nach einem der Ansprüche 1 bis 3, worin die Epoxidverbindung ein Monoepoxid ist, vorzugsweise ein Alkylglycidylether, ein Arylglycidylether oder ein epoxidiertes Olefin ist.

5. Copolymer nach Anspruch 4, worin das Monoepoxid n-Butylglycidylether, Cyclohexenoxid, Styroloxid oder insbesondere Phenylglycidylether ist.

6. Copolymer nach Anspruch 4 oder 5, worin ein Mol Diphosphit pro Mol Monoepoxid eingesetzt wird.

7. Copolymer nach einem der Ansprüche 1 bis 3, worin die Epoxidverbindung ein Epoxidharz ist.

8. Copolymer nach Anspruch 7, worin das Epoxidharz einen Epoxidgehalt von 2 bis 10 Äquivalenten/kg aufweist und ein Glycidylether, Glycidylester oder N-Glycidylderivat von aromatischen, heterocyclischen, cycloaliphatischen oder aliphatischen Verbindungen ist, und insbesondere ein Bisphenol A-diglycidylether, ein Glycidylether von 1,1,1-Trimethylolpropan oder ein Epoxy-Novolak ist.

9. Copolymer nach Anspruch 7 oder 8, worin 0,1 bis 1 Mol Diphosphit pro Epoxidäquivalent des Epoxidharzes eingesetzt werden.

10. Copolymer nach einem der Ansprüche 7 bis 9, worin die Mengen des Diphosphits und des Epoxidharzes so gewählt werden, dass ein phosphorhaltiges Epoxidharz mit 2 bis 10 Gew. % Phosphor entsteht.

11. Verfahren zur Herstellung der Copolymere nach Anspruch 1 durch Erhitzen des Reaktionsgemisches bei einer Temperatur von 80 bis 220 °C, vorzugsweise bei 100 bis 200 °C.

12. Verfahren zur Herstellung der Dialkylpentaerythritdiphosphite der Formel I nach Anspruch 1 durch Umesterung eines Trialkylphosphits, wobei die Alkylgruppen 1-4 C-Atome aufweisen, mit Pentaerythrit in Gegenwart eines Katalysators, dadurch gekennzeichnet, dass die Umesterung in Toluol oder Xylol bei Rückflusstemperatur ausgeführt wird und das während der Reaktion gebildete Alkanol als Azeotrop mit Toluol oder Xylol abdestilliert wird.

13. Stoffgemisch enthaltend

(a) ein phosphorhaltiges Copolymer nach Anspruch 1 und

(b) ein Epoxidharz.

14. Härtbares Stoffgemisch enthaltend

(a) ein phosphorhaltiges Epoxidharz nach Anspruch 10 und

(c) ein Härtungsmittel für Epoxidharze.

15. Vernetztes Produkt erhältlich durch Härtung des Stoffgemisches nach Anspruch 13 mit einem Härtungsmittel für Epoxidharze.

16. Vernetztes Produkt erhältlich durch Härtung des härtbaren Stoffgemisches nach Anspruch 14.

Patentansprüche für folgenden Vertragsstaat: ES

1. Verfahren zur Herstellung eines phosphorhaltigen Copolymers durch Umsetzung einer Epoxidverbindung mit einem Dialkylpentaerythritdiphosphit der Formel I

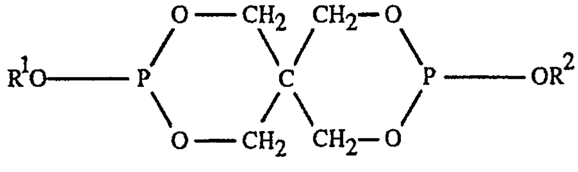

(I),

worin $R^1$ und $R^2$ unabhängig voneinander eine $C_1$-$C_4$-Alkylgruppe bedeuten.

2. Verfahren nach Anspruch 1, worin $R^1$ und $R^2$ gleich sind uund vorzugsweise n-Butyl oder insbesondere Methyl bedeuten.

3. Verfahren nach Anspruch 1 oder 2, worin 0,05 bis 5 Mol, vorzugsweise 0,1 bis 2,5 Mol, Diphosphit pro Mol der Epoxidverbindung eingesetzt werden.

4. Verfahren nach einem der Ansprüche 1 bis 3, worin die Epoxidverbindung ein Monoepoxid ist.

5. Verfahren nach Anspruch 4, worin das Monoepoxid ein Alkylglycidylether, ein Arylglycidylether oder ein epoxidiertes Olefin ist.

6. Verfahren nach Anspruch 5, worin das Monoepoxid n-Butylglycidylether, Phenylglycidylether, Cyclohexenoxid oder Styroloxid ist.

7. Verfahren nach einem der Ansprüche 4 bis 6, worin ein Mol Diphosphit pro Mol Monoepoxid eingesetzt wird.

8. Verfahren nach einem der Ansprüche 1 bis 3, worin die Epoxidverbindung ein Epoxidharz ist.

9. Verfahren nach Anspruch 8, worin das Epoxidharz einen Epoxidgehalt von 2 bis 10 Äquivalenten/kg aufweist und ein Glycidylether, Glycidylester oder N-Glycidylderivat von aromatischen, heterocyclischen, cycloaliphatischen oder aliphatischen Verbindungen ist.

10. Verfahren nach Anspruch 9, worin das Epoxidharz ein Bisphenol A-diglycidylether, ein Glycidylether von 1,1,1-Trimethylolpropan oder ein Epoxy-Novolak ist.

11. Verfahren nach einem der Ansprüche 8 bis 10, worin 0,1 bis 1 Mol Diphosphit pro Epoxidäquivalent des Epoxidharzes eingesetzt werden.

12. Verfahren nach einem der Ansprüche 8 bis 11, worin die Mengen des Diphosphits und des Epoxidharzes so gewählt werden, dass ein phosphorhaltiges Epoxidharz mit 2 bis 10 Gew.% Phosphor entsteht.

13. Verfahren nach Anspruch 1, worin die Umsetzung bei einer Temperatur von 80 bis 220 °C, vorzugsweise bei 100 bis 200 °C, stattfindet.

14. Verfahren zur Herstellung der Dialkylpentaerythritdiphosphite der Formel I nach Anspruch 1 durch Umesterung eines Trialkylphosphits, wobei die Alkylgruppen 1-4 C-Atome aufweisen, mit Pentaerythrit in Gegenwart eines Katalysators, dadurch gekennzeichnet, dass die Umesterung in Toluol oder Xylol bei Rückflusstemperatur ausgeführt wird und das während der Reaktion gebildete Alkanol als Azeotrop mit Toluol oder Xylol abdestilliert wird.

15. Verfahren zur Herstellung von vernetzten Produkten durch Härtung eines Stoffgemisches enthaltend

(a) ein phosphorhaltiges Copolymer nach Anspruch 1,

(b) ein Epoxidharz, und

(c) ein Härtungsmittel für Epoxidharze.

16. Verfahren zur Herstellung von vernetzten Produkten durch Härtung eines Stoffgemisches enthaltend

(a) ein phosphorhaltiges Epoxidharz nach Anspruch 12 und

(c) ein Härtungsmittel für Epoidharze.